(19) Europäisches Patentamt

European Patent Office

Office européen des brevets

(11) **EP 0 913 278 A2**

(12) **EUROPEAN PATENT APPLICATION**

(43) Date of publication:
06.05.1999 Bulletin 1999/18

(51) Int. Cl.$^6$: **B60G 17/005**

(21) Application number: 98120502.4

(22) Date of filing: 29.10.1998

(84) Designated Contracting States:
AT BE CH CY DE DK ES FI FR GB GR IE IT LI LU
MC NL PT SE
Designated Extension States:
AL LT LV MK RO SI

(30) Priority: 30.10.1997 JP 298701/97

(71) Applicant:
Kabushiki Kaisha Toyoda Jidoshokki
Seisakusho
Aichi-ken 448-8671 (JP)

(72) Inventors:
• Ishikawa, Kazuo
  Kariya-shi, Aichi-ken 448-8671 (JP)
• Ogawa, Takaki
  Kariya-shi, Aichi-ken 448-8671 (JP)

(74) Representative:
Pellmann, Hans-Bernd, Dipl.-Ing. et al
Patentanwaltsbüro
Tiedtke-Bühling-Kinne & Partner
Bavariaring 4
80336 München (DE)

(54) **Axle tilt control method and apparatus for industrial vehicles**

(57) An industrial vehicle has a body frame (1a) and an axle (10) pivotally supported by the body frame. The vehicle also includes a damper (13) located between the body frame and the axle. An passage supplies oil to the damper in accordance with tilting of the axle and receives oil discharged from the damper. A control valve (14) is located in the passage to control oil flow into and out of the damper. A tilt angle sensor detects the tilt angle of the axle. A controller controls the control valve in accordance with locking conditions for locking and unlocking the axle. When the locking conditions are not satisfied, the controller monitors whether the tilt angle of the axle detected by the tilt angle sensor exceeds a predetermined maximum tilt angle. The controller locks the axle if the tilt angle exceeds the maximum tilt angle, and thereafter unlocks the axle if the forces on the rear axle tend to decrease the tilt angle.

**Fig.1**

**Description**

The present invention relates to an apparatus that controls tilting of an axle in an industrial vehicle.

In a typical industrial vehicle such as a forklift, an axle for supporting the rear wheels is pivotaly secured to the body frame for improving comfort and stability of the vehicle. However, if such a forklift is steered to change directions, lateral acceleration (centrifugal force) acts on the vehicle and tilts the forklift. The tilting may destabilize the vehicle.

Japanese Unexamined Patent Publication No. 58-211903 describes a forklift that has a detector for detecting centrifugal force produced when the vehicle changes directions. If the detected centrifugal force exceeds a predetermined value, a locking mechanism locks the axle to the body frame and thus stabilizes the forklift.

The axle is locked by locking a damper, which couples the body frame with the axle. Specifically, oil passages connected to the damper are shut such that oil flow from and into the damper is stopped. As a result, the axle is locked to the body frame. To unlock the damper, the oil passages are opened. This permits the axle to be tilted with respect to the body frame.

An excessive tilt angle of the axle deteriorates the stability of the vehicle. Therefore, a typical industrial vehicle has mechanical stoppers for limiting the tilt angle of an axle, or for defining the maximum tilt angle. The stoppers are provided either on the axle or on the body frame.

Such mechanical stoppers repeatedly collide with the axle for limiting the tilt angle of the axle, which wears the stopper. If the worn parts are not replaced, the lateral stability of the vehicle will be deteriorated. Therefore, the stoppers need to be frequently checked for wear and replaced if necessary to maintain the maximum tilt angle of the axle. In other words, the maintenance of the stoppers is troublesome. When the vehicle travels on a flat road, a smaller maximum tilt angle of the axle improves the stability of the vehicle. On the other hand, if the road is bumpy, a smaller maximum tilt angle deteriorates the vehicle stability. The maximum tilt angle is therefore preferably changed in accordance with the condition of the road. However, it is difficult to change the maximum tilt angle, since it is set by mechanical stoppers.

Accordingly, it is a first objective of the present invention to provide an axle tilt control apparatus for industrial vehicles that prevents the maximum tilt angle of the axle from being increased due to wear of the stoppers. A second objective of the present invention is to provide an axle tilt control apparatus that changes the maximum tilt angle of the vehicle.

To achieve foregoing and other objectives and in accordance with the purpose of the present invention, an axle tilt control apparatus for an industrial vehicle having an axle pivotally supported on a frame is provided. The apparatus includes a damper, a conduit, a control valve, a detector and a controller. The damper is located between the frame and the axle. The conduit permits oil to enter and exit the damper as the axle pivots. The control valve is located in the conduit for controlling flow of oil into and out of the damper. The detector detects the tilt angle of the axle. The controller for locks and unlocks the axle by controlling the control valve based on a predetermined locking condition. When the locking condition is not satisfied the controller locks the axle if the tilt angle detected by the detector exceeds a predetermined maximum tilt angle. The controller thereafter unlocks the axle if the tilt angle would decrease if unlocked.

The present invention is also applicable for a method for controlling a pivotal axle of an industrial vehicle. The method includes steps of detecting an operating characteristic related to the stability of the vehicle, permitting free pivotal movement of the axle when the operating characteristic is within a first predetermined range, and restricting pivotal movement of the axle when the operating characteristic is within a second predetermined range by activating a restricting device. The method further includes a step of restricting the axle by activating the restricting device if the axle pivots beyond a predetermined maximum angle when the axle is permitted to pivot freely based on the operating characteristic.

Other aspects and advantages of the invention will become apparent from the following description, taken in conjunction with the accompanying drawings, illustrating by way of example the principles of the invention.

The invention, together with objects and advantages thereof, may best be understood by reference to the following description of the presently preferred embodiments together with the accompanying drawings in which:

Fig. 1 is a diagrammatic view showing a tilt control apparatus of a forklift;

Fig. 2 is a diagrammatic view showing an axle controlling mechanism in the forklift of Fig. 1;

Fig. 3 is a side view of the forklift of Fig. 1;

Fig. 4 is a block diagram of the tilt control apparatus of Fig. 1;

Fig. 5(a) is a front view showing a knob of the tilt angle changer of Fig. 4;

Fig. 5(b) is a map showing the correspondence between the maximum tilt angle and the rotational amount of the knob of Fig. 5(a);

Fig. 6 is a flowchart showing maximum tilt angle control; and

Fig. 7 is a diagram showing the relationship between the tilt angle of the rear axle and conditions for determining the maximum tilt angle.

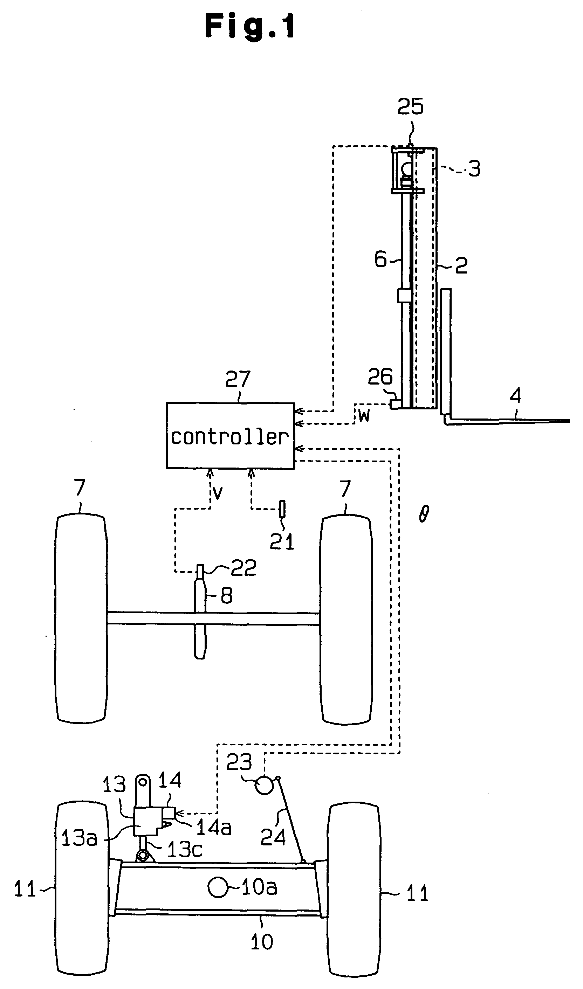

A forklift having an apparatus according to a first embodiment of the present invention will now be described with reference to Figs. 1 to 7.

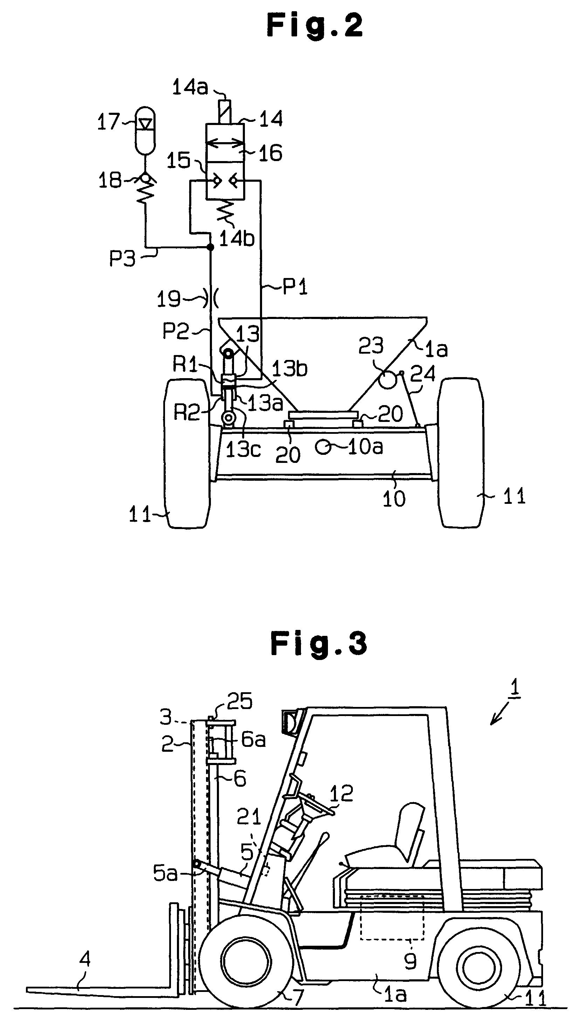

A forklift 1 illustrated in Fig. 3 has driven front wheels and steered rear wheels. As shown in Fig. 3, a pair of outer masts 2 are arranged on the front of a body frame 1a. A pair of inner masts 3 are arranged between the outer masts 2. A fork 4 is coupled to each inner mast 3 by a chain and a lift bracket (neither is shown). The forks 4, together with the inner masts 3, are lifted and lowered and serve as a loading attachment.

Each outer mast 2 is coupled to the body frame 1a by a tilt cylinder 5. Specifically, each cylinder 5 includes a piston rod 5a, and the distal end of the piston rod 5a is coupled to the corresponding outer mast 2. The tilt cylinders 5 extend and draw the piston rods 5a thereby inclining the outer masts 2. A lift cylinder 6 is located on the inner side of each outer mast 2. Each lift cylinder 6 includes a piston rod 6a, which is coupled to the top end of the corresponding inner mast 3. The lift cylinders 6 extend and retract the piston rods 6a thereby lift and lower the forks 4. Front wheels 7 are connected to an engine 9 (see Fig. 3) by a differential ring gear 8 (see Fig. 1) and a transmission (not shown). Thus, the front wheels 7 are driven by the engine 9.

As shown in Figs. 1 and 2, a rear axle 10 extends through the lower rear portion of the body frame 1a. The rear axle 10 pivots about a center pin 10a. Rear wheels 11 are coupled to the rear axle 10 by a steering cylinder and a link mechanism (neither is shown). The rear wheels 11 pivot integrally with the rear axle 10 relative to the body frame 1a. The steering cylinder is controlled by a steering wheel 12 thereby steering the rear wheels 11.

As shown in Fig. 2, a hydraulic damper 13 connects the rear axle 10 to the body frame 1a. The damper 13 is a multi-movement hydraulic cylinder and includes a damper body 13a and a piston 13b. The damper body 13a is coupled to the body frame 1a, and the piston 13b includes a piston rod 13c extending therefrom. The distal end of the piston rod 13c is coupled to the rear axle 10.

The piston 13b defines a first chamber R1 and a second chamber R2 in the damper body 13a. The first and second chambers R1, R2 are connected with first and second passages P1, P2, respectively. The first passage P1 and the second passage P2 communicate the first chamber R1 and the second chamber R2 with a control valve 14, respectively. The control valve 14 is a normally closed, two-way switch valve that has two ports. The valve 14 includes a solenoid 14a, a spring 14b and a spool. When the solenoid 14a is de-excited, the spring 14b closes the valve 14. The spool of the valve 14 includes a disconnection position 15 and a connection position 16. The second passage P2 is coupled to an accumulator (reservoir) 17 by a third passage P3 and a check valve 18.

When the spool of the valve 14 at the closed position, as shown in Fig. 2, oil flow from and into the chambers R1, R2 is prohibited. Accordingly, the damper 13 is locked. As a result, the rear axle 10 is locked to the body frame 1a and cannot tilt. When the spool is at the open position, or connection position 16, which is opposite to the position shown in Fig. 2, oil flow between the chambers R1, R2 is permitted. In this state, the damper 13 is unlocked and the rear axle 10 is tiltable. A throttle 19 is provided in the second passage P2. The damper 13 and the control valve 14 constitute an axle controlling mechanism for restricting tilting of the rear axle 10.

As shown in Fig. 2, a pair of stoppers 20 are located on the top of the rear axle 10. The stoppers 20 prevent the rear axle 10 from pivoting relative to the body frame 1a beyond a predetermined angle. The stoppers 20 contact engaging portions located on the body frame 1a to limit the tilting of the rear axle 10. The stoppers 20 limit tilting of the rear axle 10 when the damper 13 malfunctions.

As shown in Fig. 3, a yaw rate sensor 21 is located in the front portion of the forklift 1. In this embodiment, the yaw rate sensor 21 is a piezoelectric gyroscope. As shown in Fig. 1, a vehicle speed sensor 22 is located in the vicinity of the differential ring gear 8. The vehicle speed sensor 22 detects the number of rotation of the gear 8 per unit of time thereby measuring the speed v of the forklift 1. The sensor 22 then outputs a signal indicative of the forklift speed v.

As shown in Figs. 1 and 2, a tilt angle sensor 23 is located on the body frame 1a. The tilt angle sensor 23 detects the tilt angle $\theta$ of the rear axle 10 relative to frame 1a relative to a horizontal line of the frame 1a. The tilt angle sensor 23 includes a rotational potentiometer. Tilting of the rear axle 10 is transmitted to the sensor 23 by a link 24. The sensor 23 outputs a signal indicative of the tilt angle $\theta$ of the rear axle 10.

As shown in Figs. 1 and 3, a fork position sensor 25 is located on the top of the outer masts 2. The fork position sensor 25 includes, for example, a limit switch. The sensor 25 is turned on when the height of the forks 4 is equal to or higher than a predetermined value $h_0$ and is turned off when the height of the forks 4 is lower than the predetermined value $h_0$. In this embodiment, the predetermined value $h_0$ is substantially one-half of the maximum height hmax of the forks 4.

A pressure sensor 26 is located on one of the lift cylinders 6 to detect the weight of load. The pressure sensor 26 detects oil pressure in the lift cylinder 6 and outputs a signal w, which is indicative of the weight of the load on the forks 4. The fork position sensor 25 and the pressure sensor 26 constitute an apparatus for detecting the state of the load. As shown in Fig. 1, the solenoid 14a of the control valve 14 and the sensors 21-23, 25 and 26 are electrically connected with a controller 27.

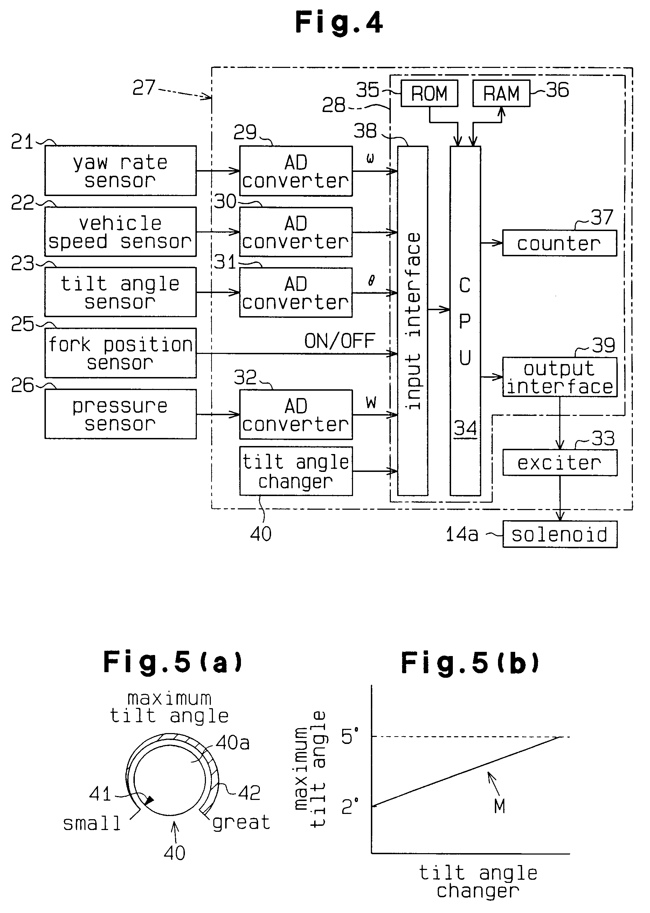

The tilt control system of the forklift 1 will now be described with reference to Fig. 4. Tilting of the forklift 1 is controlled by the controller 27. The controller 27 includes a microcomputer 28, analog-to-digital converters 29-32 and an exciter 33. The microcomputer 28 includes a central processing unit (CPU) 34, a read only memory (ROM) 35, a random access memory 36, a counter 37, an input interface 38 and an output interface 39.

The CPU 34 is connected to the yaw rate sensor 21, the vehicle speed sensor 22, the tilt angle sensor 23 and the pressure sensor 26 by the analog-to-digital converters 29-32 and the input interface 38. The CPU 34 is also connected to the solenoid 14a by the exciter 33 and the output interface 39. The CPU 34 sends an unlocking signal (exciting current) to the solenoid 14a. The unlocking signal excites the solenoid 14a and retains the control valve 14 at the open position. When the CPU 34 stops sending the unlocking signal to the solenoid 14a, the control valve 14 is moved to the closed position.

The ROM 35 stores programs such as a tilt control program. The tilt control program is a program for improving the stability of the vehicle by locking the rear axle 10 against tilting when predetermined locking conditions are satisfied. In this embodiment, the CPU 34 judges that the locking conditions are satisfied when at least one of the following conditions (1)-(6) is satisfied.

(1) When the rate of change $\Delta\omega/\Delta T$ of the yaw rate $\omega$ is greater than an upper limit value K1.

(2) When the rate of change $\Delta\omega/\Delta T$ of the yaw rate $\omega$ changes from a value that is greater than the value K1 to a value that is equal to or smaller than the value K1 and is greater than a lower limit value K2.

(3) When the rate of change $\Delta\omega/\Delta T$ of the yaw rate $\omega$ changes from the value of the condition (2) to a value that is equal to or smaller than the lower limit value K2 and before a predetermined time period T has elapsed.

(4) When the lateral acceleration Gs is greater than an upper limit value H1.

(5) When the lateral acceleration Gs changes from a value that is greater than the value H1 to a value that is equal to or smaller than the value H1 and is greater than a lower limit value H2.

(6) When the fork position sensor 25 outputs an ON signal and the pressure sensor 26 detects a value that is equal to or greater than a reference value N.

The upper and lower limit values K1, K2 of the rate of change $\Delta\omega/\Delta T$ of the yaw rate $\omega$ and the predetermined time period T are stored in the ROM 35. The values K1 and K2 are used to judge whether the locking condition regarding the rate of change $\Delta\omega/\Delta T$ of the yaw rate $\omega$ is satisfied. The upper and lower limit values H1, H2 of the lateral acceleration are stored in the ROM 35. The values H1, H2 are used to judge whether the locking condition regarding the centrifugal force acting of the forklift 1 is satisfied. Further, the ROM 35 stores a reference pressure value N. The value N is used to judge whether the locking condition regarding the state of a carried load is satisfied. The values K1, K2, H1, H2 and the time period T are determined based on road tests or are theoretically calculated such that the rear axle 10 is locked for stabilizing the forklift 1 when necessary. The reference value N is also determined based on loading tests or is theoretically calculated for improving the stability of the forklift 1 when loading or unloading objects.

The CPU 34 computes the rate of change $\Delta\omega/\Delta T$ of the yaw rate $\omega$, which is detected by the yaw rate sensor 21. The CPU 34 also computes the lateral acceleration Gs by multiplying the yaw rate $\omega$ by the vehicle speed v detected by the vehicle speed sensor 22 ($Gs = v \cdot \omega$).

The CPU 34 detects the weight of an object located on the forks 4 based on a signal from the pressure sensor 26. The CPU 34 judges whether the locking condition regarding the state of the load is satisfied based on the signals from the pressure sensor 26 and the fork position sensor 25.

The CPU 34 sends a locking signal to the control valve 14 when at least one of the locking conditions (1)-(6) is satisfied thereby retaining the control valve 14 at the closed position. When no locking condition is satisfied, the CPU 34 sends an unlocking signal to the solenoid 14a thereby moving the valve 14 to the open position 16. The locking signal refers to a signal for de-exciting the solenoid 14a. Once de-excited, the solenoid 14a remains de-excited until the axle 10 needs to be unlocked.

The controller 27 includes a tilt angle changer 40 for changing the maximum tilt angle of the rear axle 10. The changer 40 is connected to the CPU 34 by the input interface 38. The changer 40 outputs a digitised value signal corresponding to the maximum tilt angle $\theta s$. The digitized value signal is continuously variable by the regulator 40, which has a manually rotatable knob 40a, as shown in Fig 5(a). The knob 40a has an indicium 41 printed on it for indicating the position of the knob 40a. An angle indicator 42 surrounds the knob 40a. The angle indicator 42 indicates the relationship between the rotational amount of the knob 40a and the maximum tilt angle of the rear axle 10. The angle indicator 42 is an arcuate band, which becomes wider to indicate a greater maximum tilt angle.

When no locking condition is satisfied, the CPU 34 prevents the rear axle 10 from tilting beyond a predetermined maximum tilt angle $\theta$s. The CPU 34 compares the current tilt angle $\theta$ of the rear axle 10 detected by the tilt angle sensor 23 with a predetermined maximum tilt angle $\theta$s. If the current tilt angle $\theta$ is greater than the maximum tilt angle $\theta$s, the CPU 34 sends a locking signal to the control valve 14. The rear axle 10 is locked, accordingly. In this state, if the rear axle 10 receives a force that would decrease its tilt angle $\theta$, the CPU 34 sends an unlocking signal to the control valve 14.

The ROM 35 stores a map M shown in Fig. 5(b) for computing the maximum tilt angle $\theta$s based on signals from the maximum tilt angle changer 40. In the map M, the maximum tilt angle $\theta$s increases from two degrees to five degrees as the output of the changer 40 increases. In other words, the maximum tilt angle $\theta$s corresponds to the output signal of the changer 40. The CPU 34 uses the maximum tilt angle $\theta$s as a reference value for determining whether to lock the axle 10 when the locking conditions are not satisfied.

The operation of the above described axle tilt control apparatus will now be described.

The CPU 34 performs axle tilt control at predetermined time intervals. The CPU 34 computes the lateral acceleration Gs and the rate of change $\Delta\omega/\Delta T$ of the yaw rate $\omega$ based on signals from the yaw rate sensor 21 and the vehicle speed sensor 22. The CPU 34 also judges whether any locking condition (1)-(5) is satisfied. The CPU 34 further judges whether the locking condition (6) is satisfied based on signals from the tilt angle sensor 23 and the pressure sensor 26. If at least one of the conditions (1)-(6) is satisfied, the CPU 34 immediately outputs a locking signal. The locking signal de-excites the solenoid 14a of the control valve 14, which is excited when the rear axle 10 is unlocked. Accordingly, the control valve 14 is moved to the closed position by the spring 14b. As a result, oil cannot flow into or out of the damper 13 and the rear axle 10 is locked.

The locking condition regarding the rate of change $\Delta\omega/\Delta T$ of the yaw rate $\omega$ is satisfied when the rate $\Delta\omega/\Delta T$ exceeds the upper limit value K1. Thereafter, even if the rate $\Delta\omega/\Delta T$ becomes less than the upper limit value K1, the CPU 34 judges that the locking condition is satisfied as long as the rate $\Delta\omega/\Delta T$ is greater than the lower limit value K2. The CPU 34 thus continues locking the rear axle 10. If the rate $\Delta\omega/\Delta T$ falls below than the lower limit value K2, the CPU 34 starts measuring time by the counter 37. When the time period during which the rate $\Delta\omega/\Delta T$ is smaller than the lower limit value K2 reaches a predetermined length, the CPU 34 judges that the locking condition regarding the rate $\Delta\omega/\Delta T$ is no longer satisfied. Therefore, even if the rate $\Delta\omega/\Delta T$ fluctuates in the vicinity of the limit values K1, K2 after the rear axle 10 is locked based on the rate $\Delta\omega/\Delta T$, the rear axle 10 is prevented from being frequently locked and unlocked.

The locking condition regarding the lateral acceleration Gs is satisfied when the lateral acceleration Gs exceeds the upper limit value H1. Thereafter, even if the lateral acceleration Gs falls below than the upper limit value H1, the CPU 34 judges that the locking condition is satisfied as long as the lateral acceleration Gs is greater than the lower limit value H2. The CPU 34 thus continues locking the rear axle 10. Therefore, even if the lateral acceleration Gs fluctuates in the vicinity of the limit values H1, H2 after the rear axle 10 is locked based on the lateral acceleration Gs, the rear axle 10 is prevented from being frequently locked and unlocked.

If all the conditions (1)-(6) become unsatisfied while the rear axle 10 is locked, the rear axle 10 is then to be unlocked. In this state, the CPU 34 outputs an exciting signal to the control valve 14 thereby moving the control valve 14 to the open position. As a result, the rear axle 10 is free to tilt.

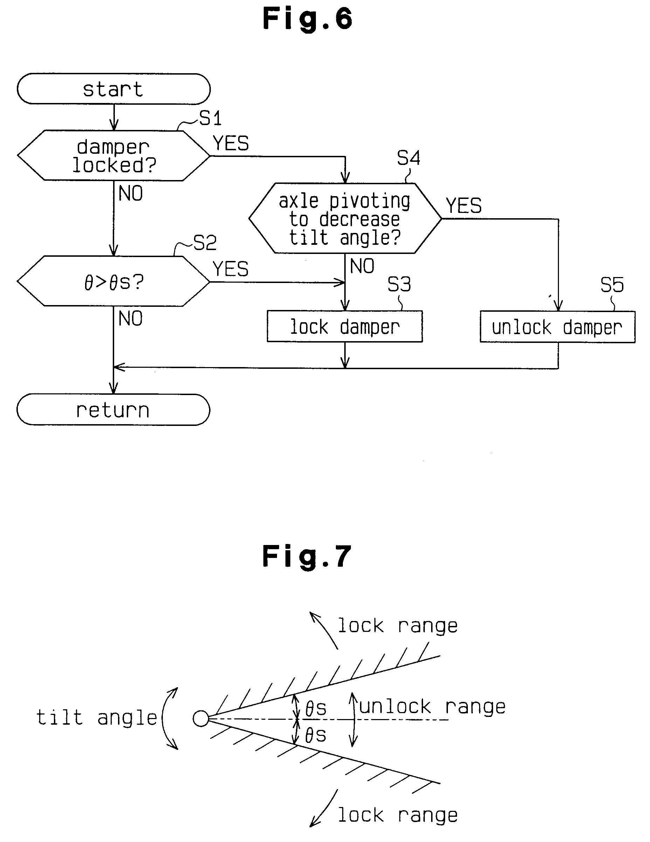

When the rear axle 10 is free to tilt, the CPU 34 performs the program shown in Fig. 6 for preventing the rear axle 10 from tilting beyond the predetermined maximum tilt angle. At step S1, the CPU 34 judges whether the damper 34 is locked, or whether the control valve 14 is at the closed position. This judgment is executed, for example, by checking whether an exciting signal is being sent to the solenoid 14a. If the damper 13 is not locked, the CPU 34 moves to step S2 and judges whether the current tilt angle $\theta$ of the rear axle 10 is greater than the maximum tilt angle $\theta$s. If the tilt angle $\theta$ is greater than the maximum angle $\theta$s, the CPU 34 moves to step S3. At step S3, the CPU 34 outputs a signal for locking the damper 13, or a signal for de-exciting the solenoid 14a. As a result, the control valve 14 is closed and the damper 13 is locked. The rear axle 10 is locked, accordingly. If the solenoid 14a is already de-excited, the solenoid 14a keeps being de-excited.

If the damper 13 is locked at step S1, the CPU 34 moves to step S4 and judges whether the rear axle 10 is pivoting such that the tilt angle $\theta$ decreases. Although the axle 10 is locked at this point, it still responds to forces by tilting slightly. This slight tilting is detected by the tilt angle sensor 23. Specifically, the CPU 34 compares the current tilt angle $\theta$ of the axle 10 with the tilt angle $\theta$ in the previous routine. If the absolute value of the current tilt angle $\theta$ is smaller than that of the previous routine, the CPU 34 judges that the tilt angle $\theta$ is decreasing and moves to step S5. At step S5, the CPU 34 outputs a signal for unlocking the damper 13, or a signal for exciting the solenoid 14a, and moves back to step S1. If the tilt angle $\theta$ is not decreasing at step S4, the CPU 34 moves to step S3.

Even when locked, the damper 13 extends and retracts slightly in response to forces applied to the axle 10. Subtle changes of the tilt angle $\theta$ after the damper 13 is locked indicate whether the rear axle 10 or the body frame 1a is receiving a net force that decreases the tilting of the rear axle 10. If the rear axle 10 or the body frame 1a is receiving a net force that decreases its tilt angle θ, the tilt angle θ will not be increased by unlocking the rear axle 10. In this case, the CPU 45 unlocks the rear axle 10 even if the tilt angle θ is in the locking range of Fig. 7. Therefore, when the rear axle 10 is locked, the rear axle 10 is released if the rear axle 10 is moved in a direction decreasing the tilt angle θ. As a result, unwanted locking of the rear axle 10 is prevented.

If the forklift 1 is traveling on a flat road surface, the smaller the maximum tilt angle θ s, the more stable the forklift 1 is. Therefore, when the forklift 1 is on a flat road surface, the maximum tilt angle θ s is set to a small value. If one of the front wheels 7, which are driven wheels, runs over a bump while the CPU 34 is locking the rear axle 10, the other front wheel 7 might lose contact with the road, and the forklift 1 might be unable to move. In this case, increasing the maximum tilt angle θ s releases the rear axle 10 and allows both front wheels 7 to contact the road surface. The forklift 1 is then able to continue moving.

As described above, the stoppers 20 function only when the tilt angle control apparatus malfunctions. In other words, the stoppers 20 normally do not contact the body frame 1a.

The illustrated embodiment has the following advantages.

If stoppers are used to define the maximum tilt angle of the rear axle, the maximum tilt angle will increase over time due to wearing of the stoppers. This deteriorates the stability of the vehicle. In the illustrated embodiment, the tilt angle θ of the rear axle 10 relative to the body frame 1a is detected, and the damper 13 is locked so that the tilt angle θ does not exceed the maximum tilt angle θs. The maximum tilt angle is not increased due to wearing of the stoppers 20. Thus, the stoppers 20 do not need to be checked for wear or replaced.

Even if no locking condition regarding the lateral acceleration and the state of the load is satisfied in the tilt control program, the ECU 34 may lock the rear axle 10 for preventing the tilt angle θ from exceeding the maximum tilt angle θs. In this case, if the rear axle 10 receives force that reduces the angle θ, the rear axle 10 is immediately released. Therefore, unwanted locking of the rear axle 10 is discontinued.

The maximum tilt angle θs is changed by manipulating the maximum tilt angle changer 40. Therefore, the maximum tilt angle θs is adjusted in accordance with the condition of the road surface.

The changer 40 permits the maximum tilt angle θs to be continuously changed within a predetermined range. Therefore, the maximum tilt angle θs is optimized for the road condition and for the weight of the carried load.

When the maximum tilt angle θs is set to a small value, the forklift 1 may be unable to move if one of the front wheels 7 runs over a bump. However, the operator can manually adjust the changer 40 to increase the maximum value θs. The increased maximum tilt angle θs unlocks the rear axle 10 and allows the forklift 1 to regain traction. Further, even if the forklift 1 is not equipped with a sensor for detecting the condition of the road surface, the operator can optimize the maximum tilt angle θs by adjusting the changer 40. In other words, the operator can deal with sudden changes of the road condition by optimizing the maximum tilt angle θs.

The forklift 1 of the illustrated embodiment has stoppers 20. Therefore, if the control valve 14 malfunctions and the damper 13 cannot lock the rear axle 10, the stoppers 20 prevent the rear axle 10 from being excessively tilted.

In addition to the lateral acceleration, the rate of change $\Delta\omega/\Delta T$ of the yaw rate $\omega$ is used as one of the conditions for locking the rear axle 10. This allows the rear axle 10 to be locked immediately after the steering wheel 12 starts rotating. Further, when the operator changes the rotational direction of the steering wheel 12, the rear axle 10 is not unlocked.

The lateral acceleration Gs and the rate of change $\Delta\omega/\Delta T$ of the yaw rate $\omega$ are computed based on the yaw rate $\omega$ detected by the yaw rate sensor 21 and the vehicle speed v detected by the vehicle speed sensor. Therefore, the values $\Delta\omega/\Delta T$ and $\omega$ are easily and accurately obtained.

It should be apparent to those skilled in the art that the present invention may be embodied in many other specific forms without departing from the sprit and scope of the invention. Particularly, it should be understood that the invention may be embodied in the following forms.

The maximum tilt angle θ may be a fixed value. This embodiment also does not use stoppers to define the maximum tilt angle and thus avoids the disadvantages caused by wear of the stoppers.

Instead of making the maximum tilt angle θ continuously variable, the maximum tilt angle θ may be selected from a plurality of discrete angles.

The maximum tilt angle θs may be automatically adjusted according to the state of a carried load (the weight and height of the load). For example, the ROM 35 may store a map that shows the correspondence between the maximum tilt angle θ and the state (weight and height) of the carried load. In this map, a higher position and a heavier weight of the carried object correspond to a smaller maximum tilt angle θs, and a lower position and a lighter weight correspond to a greater maximum tilt angle θs. Referring to the map, the CPU 34 adjusts the maximum tilt angle θs based on signals from the fork position sensor 25 and the pressure sensor 26. This structure further improves the stability of the forklift 1.

The ROM 35 may previously store values of the maximum tilt angle θ s, each of which corresponds to a different road condition. In this case, the operator inputs the condition of the road through an input device, and the CPU 34 selects a value of the maximum tilt angle θ in accordance with the input road condition. The road conditions may include a paved road, an unpaved road and a bad road. The bad road may be classified into several levels. The operator optimizes the maximum tilt angle θs by simply inputting the condition of the road.

The knob 40a of the maximum tilt angle changer 40 may be replaced with a slidable or tiltable lever.

The stoppers 20 may be omitted.

In the illustrated embodiment, the CPU 34 locks the rear axle 10 for preventing the tilt angle θ from exceeding the maximum tilt angle θs and unlocks the rear axle 10 when the rear axle 10 receives a net force decreasing the tilt angle. Alternatively, the CPU 34 may unlock the rear axle 10 when a predetermined time period has elapsed since the axle 10 was locked. For example, the CPU 34 may increment a counter when the determination of step S4 is positive and may unlock the damper 13 when the count value reaches a predetermined number. This construction prevents the solenoid 14a from being frequently turned on and off.

Instead of calculating the lateral acceleration Gs by multiplying the yaw rate ω with the vehicle speed v ($Gs = v \cdot \omega$), the lateral acceleration Gs may be computed by multiplying the square of the vehicle speed v with the inverse number $(1/r)$ of the turn radius r of the forklift 1 $(Gs = v^2/r)$. In this case, the yaw rate sensor 21 is replaced with a wheel angle sensor and the inverse number $(1/r)$ of the turn radius r is computed based on the wheel angle detected by the wheel angle sensor. Alternatively, the forklift 1 may include an acceleration sensor for detecting centrifugal force acting on the forklift 1 when the forklift 1 is turning. The lateral acceleration Gs is computed based on the detected centrifugal force.

The locking conditions for the rear axle 10 may not include all of the locking condition regarding the rate of change $\Delta\omega/\Delta T$ of the yaw rate ω, the locking condition regarding the lateral acceleration Gs (centrifugal force) and the locking condition regarding the state of the load on the forks 4. For example, the rear axle 10 may be locked based solely on the locking condition regarding the lateral acceleration Gs. Alternatively, the locking conditions regarding the lateral acceleration Gs and the state of the load may be used. Further, the locking conditions regarding the lateral acceleration Gs and the rate of change $\Delta\omega/\Delta T$ of the yaw rate ω may be used. These variations reduce the number of necessary judgement steps and thus simplify the tilt angle control.

In the illustrated embodiment, the height and the weight of the carried object are compared with the fixed reference values for judging the locking condition regarding the state of the load. The rear axle 10 is locked when the height is higher than the reference value and the weight is heavier than the reference value. However, at least one of the reference values may be varied among multiple values or may be continuously changed. In this case, the locking condition regarding the state of the load is more suitable for the actual weight or height of the carried object. As a result, unwanted locking of the rear axle 10 is avoided.

The locking condition regarding the state of the load may include only the weight of the carried object. This simplifies the judgement of the locking conditions.

The locking condition regarding the state of the load may include only the height of the carried object. For example, suppose the forks 4 can be lifted over about four meters, a sensor for detecting whether the forks 4 are at a height of over four meters may be provided on the forklift 1. The locking condition regarding the state of the load is satisfied if the forks 4 are higher than about four meters, or when the sensor is turned on.

The control valve 14, which is a normally closed solenoid valve, may be replaced with a normally open solenoid valve.

The present invention may be embodied in a battery-powered forklift.

The term "industrial vehicle" in this embodiment is not limited to forklifts but includes vehicles having elevated center of gravity such as shovel loaders and vehicles for high lift work. The term "forklift" includes vehicles having loading attachment other than forks, for example, a roll clamp for carrying rolled paper, a block clamp for carrying and stacking blocks, a ram for carrying coiled objects such as coiled wire and cable.

Therefore, the present examples and embodiments are to be considered as illustrative and not restrictive and the invention is not to be limited to the details given herein, but may be modified within the scope and equivalence of the appended claims.

An industrial vehicle has a body frame (1a) and an axle (10) pivotally supported by the body frame. The vehicle also includes a damper (13) located between the body frame and the axle. An passage supplies oil to the damper in accordance with tilting of the axle and receives oil discharged from the damper. A control valve (14) is located in the passage to control oil flow into and out of the damper. A tilt angle sensor detects the tilt angle of the axle. A controller controls the control valve in accordance with locking conditions for locking and unlocking the axle. When the locking conditions are not satisfied, the controller monitors whether the tilt angle of the axle detected by the tilt angle sensor exceeds a predetermined maximum tilt angle. The controller locks the axle if the tilt angle exceeds the maximum tilt angle, and thereafter unlocks the axle if the forces on the rear axle tend to decrease the tilt angle.

## Claims

1. An axle tilt control apparatus for an industrial vehicle having an axle (10) pivotally supported on a frame, the apparatus being characterized by:

a damper (13) located between the frame and the axle;

a conduit (P1, P2) for permitting oil to enter and exit the damper as the axle pivots;

a control valve (14) located in the conduit for controlling flow of oil into and out of the damper;

a detector (23) for detecting the tilt angle of the axle; and

a controller (27) for locking and unlocking the axle by controlling the control valve based on a predetermined locking condition, wherein when the locking condition is not satisfied the controller locks the axle if the tilt angle detected by the detector exceeds a predetermined maximum tilt angle, and the controller thereafter unlocks the axle if the tilt angle would decrease if unlocked.

2. The apparatus according to claim 1, characterized by that the controller (27) includes a changer (40) for changing the predetermined maximum tilt angle.

3. The apparatus according to claim 2, characterized by that the changer (40) continuously changes the maximum tilt angle within a predetermined range.

4. The apparatus according to claim 2 or 3, characterized by that the changer (40) is manually controlled.

5. The apparatus according to claim 1, characterized by that the industrial vehicle is a forklift, which lifts and carries a load.

6. The apparatus according to claim 5, characterized by that the apparatus further comprises:

a weight detector (26) for detecting the weight of a load on the forklift;

a height detector (25) for detecting the height of the load lifted by the forklift; and

wherein the controller (27) automatically adjusts the maximum tilt angle in accordance with the weight and height of a load.

7. The apparatus according to claim 2, characterized by that the apparatus further comprises an input device for selectively inputting predetermined road conditions, and wherein the changer (40) changes the maximum tilt angle in accordance with the input road condition.

# Fig.1

# Fig.2

# Fig.3

# Fig.4

# Fig.5(a)

# Fig.5(b)

# Fig.6

# Fig.7